# EUROPÄISCHE PATENTSCHRIFT

(11) **EP 1 754 922 B1**
(45) Veröffentlichungstag und Bekanntmachung des Hinweises auf die Patenterteilung: **01.12.2010**
(21) Anmeldenummer: 06016707.9
(22) Anmeldetag: 10.08.2006
(51) Int. Cl.: F16L 41/00

(54) **Vakuumbehälterwandelelement mit einer durchgeführten Leitung**
Element of a vacuum vessel wall with a pipe feedthrough
Elément de paroi de caisson à vide avec traversée de conduite

(30) Priorität: 17.08.2005 DE 102005038845
(43) Veröffentlichungstag der Anmeldung: 21.02.2007
(73) Patentinhaber: Deutsches Elektronen-Synchrotron DESY, 22603 Hamburg (DE)
(72) Erfinder: Prahl, Volker, 23611 Bad Schwartau (DE); Rüter, Manfred, 22549 Hamburg (DE)
(74) Vertreter: UEXKÜLL & STOLBERG

(56) Entgegenhaltungen:
- CH-A- 516 755
- DE-A1- 4 203 334
- JP-A- 2000 329 268
- JP-A- 2002 098 277

## Beschreibung

Die vorliegende Erfindung betrifft ein Vakuumbehälterwandelement mit einem festen Flanschteil, mit einem lösbaren Flanschteil und mit einer Leitung, die aus dem Inneren des Vakuumbehälters nach außen führt, wobei das lösbare Flanschteil mit dem festen Flanschteil lösbar verbunden ist, wobei die Leitung in dem lösbaren Flanschteil gehalten ist und wobei zwischen dem festen Flanschteil und dem lösbaren Flanschteil ein ringförmiger Dichtbereich vorgesehen ist. Solch ein Vakuumbehälterwandelement ist zu Beispiel in Dokument DE-A-4203334 offenbart.

Unter dem Begriff Vakuumbehälterwandelement wird im Folgenden die Wandung eines Vakuumbehälters oder ein Teil der Wandung verstanden aber auch Strahlrohrstücke und Flanschelemente, die an einem Vakuumbehälter oder an ein Strahlrohr über herkömmliche Flanschverbindungen angeflanscht werden können. Des Weiteren werden durch den Begriff Elemente erfasst, die in eine Wandung eines Vakuumbehälters oder in ein Strahlrohr eingeschweißt werden können.

Häufig ist es erforderlich, Blenden oder Targethalter bei Beschleunigeranlagen oder Substrathalter bei Dünnschicht-Depositionsanlagen innerhalb eines Vakuumbehälters mit Hilfe von Wasser oder flüssigem Stickstoff zu kühlen. Dabei treten häufig komplizierte Führungen der Kühlleitungen auf, die große Abmessungen aufweisen.

In diesem Zusammenhang ist bei herkömmlichen Wandelementen zur Durchführung von Leitungen in einen Vakuumbehälter vorgesehen, das Flanschelement mit den Leitungen auf der vom Vakuum abgewandten Seite des Wandelements anzubringen. Daraus resultiert, dass die Leitungen bei der Montage zunächst durch eine in dem Wandelement vorgesehene Öffnung geführt werden müssen und die Leitungen anschließend mit den Blenden, Targethaltern oder Substrathaltern verbunden werden müssen, da die räumliche Ausdehnung der Kühlleitungsführung größer ist als die in dem Wandelement vorgesehene Öffnung.

Eine derartige Vorgehensweise ist jedoch mit dem Nachteil verbunden, dass die nach dem Einführen der Leitungen innerhalb des Vakuumbehälters gebildeten Verbindungen an den Leitungen häufig die Ursache für Lecks darstellen mit der Folge, dass in dem Behälter kein zufriedenstellendes Vakuum erreicht werden kann. Es ist daher wünschenswert, dass es bei der Montage einer in einem Vakuumbehälter vorgesehenen Kühlvorrichtung vermieden wird, innerhalb des Vakuumbehälters Verbindungen für Leitungen herstellen zu müssen. Ein vergleichbares Problem tritt auch bei elektrischen Leitungen auf, da elektrische Verbindungen ausgasen und dadurch das Vakuum beeinträchtigen können.

Daher liegt der vorliegenden Erfindung die Aufgabe zugrunde, ein Vakuumbehälterwandelement mit zumindest einer Leitung, die aus dem Inneren des Vakuumbehälters nach außen führt, bereitzustellen, wobei das lösbare Flanschteil mit der Leitung derart an dem festen Flanschteil vakuumdicht angebracht ist, dass es bei der Montage nicht erforderlich ist, den sich später im Vakuum befindlichen Teil der Leitung durch eine im festen Flanschteil vorgesehene Öffnung zu führen.

Diese Aufgabe wird erfindungsgemäß dadurch gelöst, dass das lösbare Flanschteil auf der dem Inneren des Vakuumbehälters zugewandten Seite des Wandelements angeordnet ist und dass eine Schraubverbindung innerhalb des ringförmigen Dichtbereichs vorgesehen ist.

Durch den erfindungsgemäßen Aufbau mit dem lösbar auf der dem Inneren des Vakuumbehälters zugewandten Seite des festen Flanschteils angebrachten lösbaren Flanschteil ist es möglich, das lösbare Flanschteil mit den Leitungen von der Behälterinnenseite her an dem Wandelement zu befestigen. Es ist daher nicht erforderlich, die später im Inneren des Vakuumbehälters befindlichen Leitungen durch eine vergleichsweise kleine Öffnung innerhalb des Wandelements hindurchführen zu müssen. Es ist lediglich erforderlich, die später außen liegenden Anschlüsse der Leitungen durch eine in dem festen Flanschteil vorgesehene Öffnung zu führen.

Durch die im Inneren des ringförmigen Dichtbereichs angeordnete Schraubverbindung wird ermöglicht, das lösbare Flanschteil vakuumdicht mit dem festen Flanschteil zu verbinden, wobei zusätzlich eine ringförmige Dichtung in dem Dichtbereich angeordnet werden kann.

Mit dem erfindungsgemäßen Wandelement ist es somit möglich, im Inneren eines Vakuumbehälters eine Kühlleitungsanordnung mit einer vergleichsweise großen Ausdehnung zu montieren, ohne dass es notwendig ist, bei der Montage in dem Bereich der Kühlleitung, der später im Inneren des Vakuumbehälters angeordnet ist, neue Verbindungen herstellen zu müssen.

In einer bevorzugten Ausführungsform weist die im Inneren des ringförmigen Bereichs vorgesehene Verschraubung eine Mehrzahl von Bohrungen auf, die durch das feste Flanschteil hindurch verlaufen, und eine Mehrzahl von dazu ausgerichteten Gewindesackbohrungen, die in dem lösbaren Flanschteil vorgesehen sind. Damit können von der Außenseite her Schrauben in die Gewindesackbohrungen geführt werden und das lösbare Flanschteil durch Anziehen der Schrauben von außen gegen die Innenseite des festen Flanschteils gezogen werden.

Weiterhin ist es bevorzugt, dass der ringförmige Dichtbereich der beiden Flanschteile jeweils umlaufende Schneidkanten aufweist die einander zugewandt sind, sodass ein Kupferring oder ein Kunststoffring zwischen den Schneidkanten angeordnet werden kann, in den diese beim Anziehen einschneiden, was dann zu einer zuverlässigen Abdichtung führt.

Alternativ zu den umlaufenden Schneidkanten können im Dichtbereich einander gegenüberliegende Dichtflächen vorgesehen sein, zwischen die ein Metallring eingefügt werden kann, der beim Anziehen der Verschraubung als Dichtung dient.

Zur Durchführung des Anschlusses der in dem lösbaren Flanschteil vorgesehenen Leitung ist es weiterhin bevorzugt, wenn das feste Flanschteil innerhalb des ringförmigen Dichtbereichs eine Aussparung aufweist.

Zur Verbindung mit einem Vakuumbehälter ist es ferner bevorzugt, wenn das feste Flanschteil neben der Verschraubung für das lösbare Flanschteil noch eine äußere Flanschverbindung aufweist, mittels derer das feste Flanschteil an einer Behälterwandung befestigt werden kann, wobei es sich bei der äußeren Flanschverbindung um herkömmliche CF-Flansch-Verbindungen handeln kann.

In einer weiteren bevorzugten Ausführungsform ist die Leitung, die in dem lösbaren Flanschelement vorgesehen ist, als Fluidleitung, beispielsweise für ein Kühlmittel, ausgebildet. Dabei ist es weiterhin bevorzugt, wenn diese Fluidleitung gegenüber dem lösbaren Flanschelement elektrisch isoliert ist, sodass keine störenden elektromagnetischen Felder von der Vakuumbehälterwandung zu dem mit den Fluidleitungen verbundenen Einrichtungen im Vakuumbehälter übertragen werden.

Im Falle von Fluidleitungen ist es außerdem bevorzugt, wenn eine zusätzliche zweite Fluidleitung in dem lösbaren Flanschelement gehalten ist, eine der Fluidleitungen als Zuleitung dient, die Zweite als Abflussleitung und die Zuleitung und die Abflussleitung im Inneren des Vakuumbehälters als eine geschlossene Ringleitung ausgebildet sind. Dies stellt weiterhin sicher, dass bei der Montage im Inneren des Vakuumbehälters keine zusätzlichen Verbindungen innerhalb der Leitungsanordnung erforderlich sind.

Alternativ zu Fluidleitungen kann die Leitung auch als elektrische Leitung ausgeführt sein, bei denen ebenfalls das Problem auftritt, dass zuverlässige, erst bei der Montage im späteren Vakuumbereich erstellte Kontakte später ausgasen und zu einer Verschlechterung des Vakuums führen können.

Die vorliegende Erfindung wird im Folgenden anhand einer lediglich ein bevorzugtes Ausführungsbeispiel zeigenden Zeichnung erläutert. In der Zeichnung zeigen
- Fig. 1: ein Ausführungsbeispiel eines erfindungsgemäßen Vakuumbehälterwandelements im Querschnitt,
- Fig. 2: das Ausführungsbeispiel gemäß Figur 1 in isometrischer, aufgebrochener Darstellung und
- Fig. 3: das Ausführungsbeispiel gemäß Figur 1 in Explosionsdarstellung.

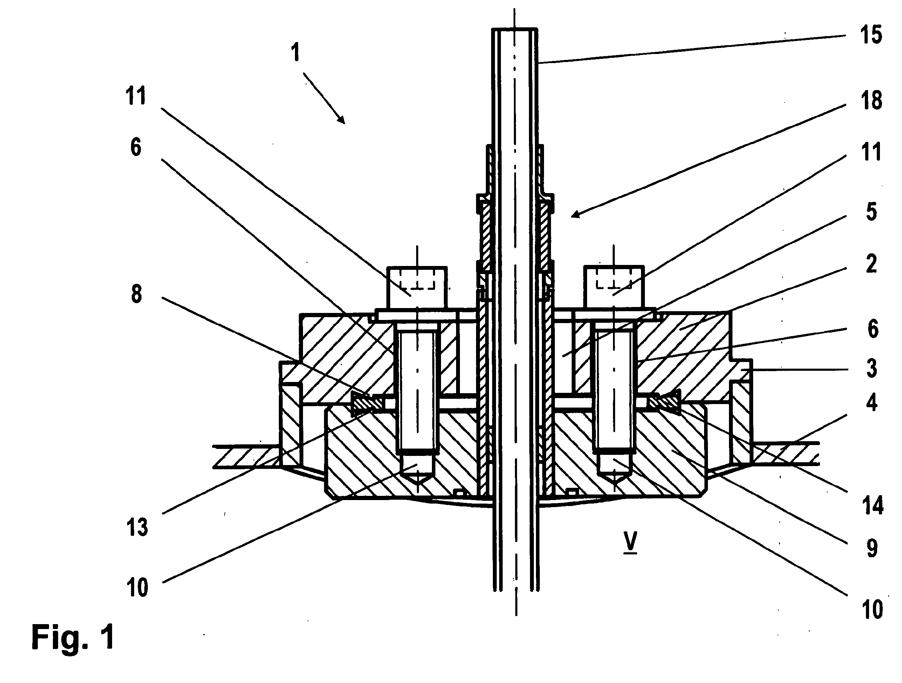

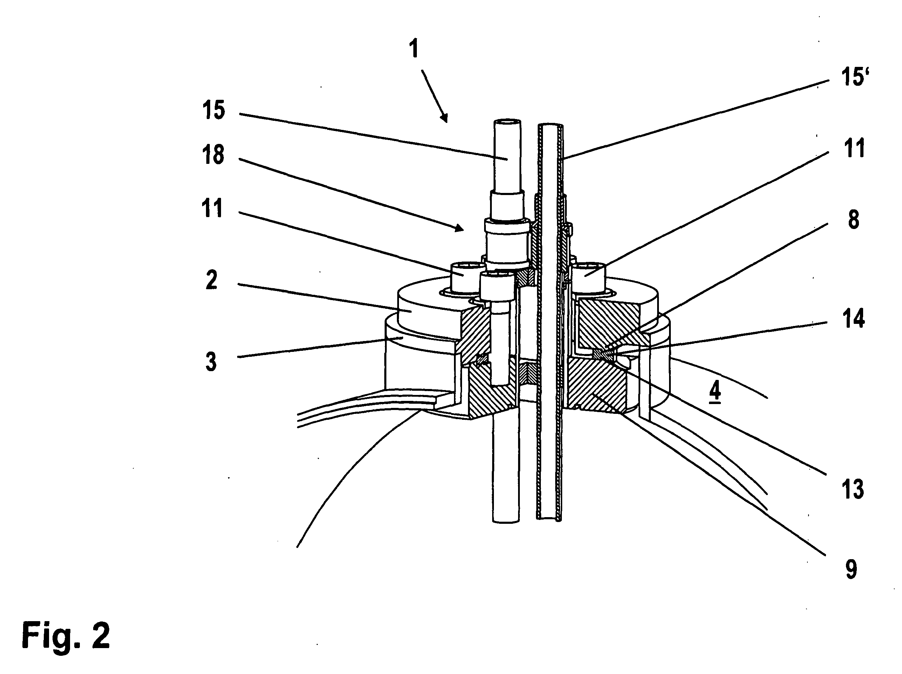

Wie den Figuren 1 und 2 zu entnehmen ist, weist das Ausführungsbeispiel eines erfindungsgemäßen Vakuumbehälterwandelements 1 ein festes Flanschteil 2 auf, das über einen umlaufenden Ring 3 mit einer Wandung 4 eines nicht näher dargestellten Vakuumbehälters verschweißt ist. Statt einer Schweißverbindung, wie im vorliegenden Ausführungsbeispiel, kann zur Verbindung des festen Flanschteils 2 mit der Wandung 4 auch eine äußere Flanschverbindung (nicht dargestellt) an dem festen Flanschteil 2 vorgesehen sein, mit der dieses an einer an dem Vakuumbehälter vorgesehenen Flanschverbindung verschraubt wird. Hierbei kann es sich insbesondere um eine herkömmliche CF-Flanschverbindung handeln.

Das feste Flanschteil 2 weist eine zentrale Aussparung 5 auf, die von sechs Durchgangsbohrungen 6 umgeben ist. Des Weiteren weist das feste Flanschteil 2 einen ringförmigen, mit einer umlaufenden Schneidkante 8 versehenen Dichtbereich auf, der die Durchgangsbohrungen 6 umgibt, so dass sie innerhalb des ringförmigen Dichtbereiches angeordnet sind.

Das Vakuumbehälterwandelement 1 weist außerdem auf der dem Inneren V des Vakuumbehälters zugewandten Seite ein lösbares Flanschteil 9 auf, das lösbar mit dem festen Flanschteil 2 verbunden ist. Dazu weist das lösbare Flanschteil 9 sechs Gewindesackbohrungen 10 auf, die zu den Durchgangsbohrungen 6 ausgerichtet sind und sich von der zu dem festen Flanschteil 2 weisenden Oberfläche des lösbaren Flanschteils 9 erstrecken. Dadurch können von der vom Inneren V des Vakuumbehälters abgewandten Seiten des Vakuumbehälterwandelements 1 Schrauben 11 durch die Durchgangsbohrungen 6 in die Gewindesackbohrungen 10 eingeführt werden und das lösbare Flanschteil 9 so gegen das feste Flanschteil 2 gezogen werden.

Das lösbare Flanschteil 9 ist in dem ringförmigen Dichtbereich mit einer zweiten umlaufenden Schneidkante 13 versehen. Zwischen den umlaufenden Schneidkanten 8, 13 ist eine Dichtung 14 vorgesehen, die entweder als eine Kunststoffdichtung oder als eine Kupferdichtung ausgeführt sein kann.

Alternativ zu der Konfiguration mit umlaufenden Schneidkanten 8, 13 ist es auch denkbar, dass in dem Dichtbereich das feste Flanschteil 2 eine erste Dichtfläche und das lösbare Flanschteil 9 eine zweite Dichtfläche aufweist, die Dichtflächen einander zugewandt sind und parallel zueinander verlaufen. In diesem Fall kann ein Metallring zwischen die Dichtflächen gelegt werden, der beim Anziehen der Schrauben 11 verformt wird.

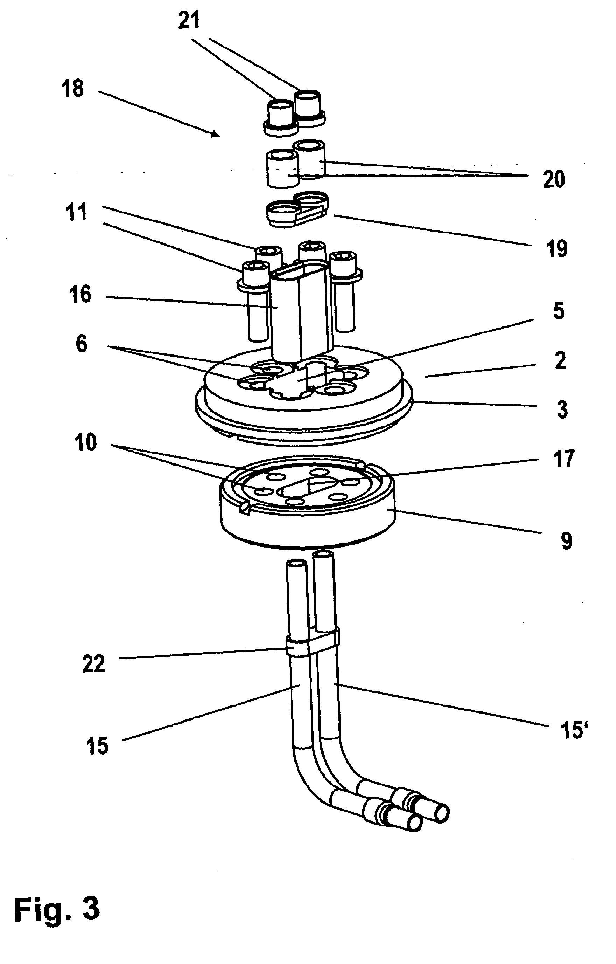

In diesem insoweit bevorzugten Ausführungsbeispiel sind in dem lösbaren Flanschteil 9 zwei Fluidleitungen 15, 15' gehalten, wobei sie durch die Aussparung 5 in dem festen Flanschteil 2 geführt sind. Dabei sind die Fluidleitungen 15, 15' gegenüber dem lösbaren Flanschteil 9 elektrisch isoliert, wobei die genaue Ausgestaltung der isolierenden Halterung der Leitungen 15, 15' unter Bezug auf Figur 3 näher erläutert werden wird.

Im Inneren V des Vakuumbehälters sind die Fluidleitungen 15, 15' bevorzugt zu einer geschlossenen Ringleitung verbunden, wobei eine erste Fluidleitung 15 die Zuleitung bildet und die zweite Fluidleitung 15' die Abflussleitung. Die so gebildete Ringleitung kann zur Kühlung eines im Inneren V des Vakuumbehälters angebrachten Bauteils, wie einer Blende, eines Targethalters oder eines Substrathalters dienen.

Alternativ ist es auch denkbar, dass statt der Fluidleitungen 15, 15' elektrische Leitungen in dem lösbaren Flanschteil 9 gehalten sind.

Im Folgenden wird unter Bezugnahme auf Figur 3 die Halterung der Fluidleitungen 15, 15' in dem lösbaren Flanschteil 9 näher erläutert. In das lösbare Flanschteil 9 ist für die Fluidleitung 15, 15' ein Halterungsrohr 16 in eine in dem lösbaren Flanschteil 9 vorgesehene Öffnung 17 eingeschweißt. Auf der von dem Inneren V des Vakuumbehälters abgewandten Seite des Halterungsrohres 16 ist ein Isolierelement 18 angebracht, das ein Verschlusselement 19, Isolierbuchsen 20 sowie Ringe 21 umfasst.

Alternativ ist es auch denkbar, dass in dem lösbaren Flanschteil 9 zwei Öffnungen vorgesehen sind, in die Verschlusselemente mit Bohrungen für die Fluidleitungen 15, 15' eingesetzt sind.

Die Isolierbuchsen 20 sind zwischen dem Verschlusselement 19 und den Ringen 21 angebracht und mit diesen jeweils gefügt. Das Verschlusselement 19 wiederum ist mit dem Halterungsrohr 16 durch Hartlöten verbunden.

Die Isolierbuchsen 20 sind aus einem keramischen Material, sodass das Verschlusselement 19 und die Ringe 21 elektrisch voneinander isoliert sind. Die Enden der Isolierbuchsen 20 sind metallisiert, um die Fügeverbindung mit dem Verschlusselement 19 bzw. den Ringen 21 zu ermöglichen. Die Fluidleitungen 15, 15' wiederum sind mit den Ringen 21 durch Hartlöten verbunden und ebenfalls gegenüber dem Halterungsrohr 16 und dem lösbaren Flanschteil 9 elektrisch isoliert. Zum Stabilisieren der Fluidleitungen 15, 15' gegenüber dem Halterungsrohr 16 ist eine Stabilisierungsbuchse 22 in das Halterungsrohr 16 eingesetzt, wobei die Stabilisierungsbuchse 22 aus einem elektrisch isolierenden Material und bevorzugt aus Keramik hergestellt ist.

Im Unterschied zu dem Stand der Technik kann bei dem erfindungsgemäßen Vakuumbehälterwandelement 1 das lösbare Flanschteil 9 mit den Fluidleitungen 15, 15' von der dem Inneren V des Vakuumbehälters zugewandten Seite her an dem festen Flanschteil 2 angebracht werden. Ein im Inneren des Vakuumbehälters angeordnetes Bauteil mit Fluidleitungen 15, 15' kann also zunächst über eine große, in dem Vakuumbehälter vorgesehene Öffnung in diesen eingebracht werden. Das das lösbare Flanschteil 9 aufweisende Anschlussstück für die Fluidleitungen 15, 15' kann anschließend von Inneren V des Vakuumbehälters her an das feste Flanschteil 2 angelegt werden, wobei eine Dichtung 14 in dem ringförmigen Dichtbereich zwischen den Schneidkanten 8, 13 angeordnet wird. Dabei werden die Fuidleitungen 15, 15' durch die in dem festen Flanschteil 2 vorgesehene Aussparung 5 geführt und anschließend werden Schrauben 11 durch die Bohrungen 6 in die Gewindesackbohrung 10 eingeschraubt, so dass eine Dichtung zwischen dem Inneren V und der Umgebung des Vakuumbehälters hergestellt wird.

Zuletzt müssen die Fluidleitungen 15, 15' außerhalb des Vakuumbehälters mit Zuleitungen und Abflussleitungen für ein Kühlmittel verbunden werden, wobei mögliche Undichtigkeiten an diesen Anschlüssen keinen Einfluss auf das Vakuum innerhalb des Vakuumbehälters haben. Durch das erfindungsgemäße Wandelement 1 wird demnach vermieden, dass bei der Montage noch Leitungsverbindungen im Inneren V des Vakuumbehälters erstellt werden müssen.

## Patentansprüche

1. Vakuumbehälterwandelement mit einem festen Flanschteil (2), mit einem lösbaren Flanschteil (9) und mit einer Leitung (15, 15'), die aus dem Inneren (V) des Vakuumbehälters nach außen führt, wobei das lösbare Flanschteil (9) mit dem festen Flanschteil (2) lösbar verbunden ist, wobei die Leitung (15, 15') in dem lösbaren Flanschteil (9) gehalten ist und wobei zwischen dem festen Flanschteil (2) und dem lösbaren Flanschteil (9) ein ringförmiger Dichtbereich vorgesehen ist, **dadurch gekennzeichnet, dass** das lösbare Flanschteil (9) auf der dem Inneren (V) des Vakuumbehälters zugewandten Seite des Wandelementes angeordnet ist und dass eine Schraubverbindung innerhalb des ringförmigen Dichtbereichs vorgesehen ist.

2. Vakuumbehälterwandelement nach Anspruch 1, **dadurch gekennzeichnet, dass** die Verschraubung eine Mehrzahl von Bohrungen (6) durch das feste Flanschteil (2) und eine Mehrzahl von dazu ausgerichteten Gewindesackbohrungen (10) in dem lösbaren Flanschteil (9) umfasst und dass die Gewindesackbohrungen (10) sich von der zu dem festen Flanschteil (2) weisenden Oberfläche des lösbaren Flanschteils (9) erstrecken.

3. Vakuumbehälterwandelement nach Anspruch 1 oder 2, **dadurch gekennzeichnet, dass** der ringförmige Dichtbereich eine erste umlaufende Schneidkante (8) an dem festen Flanschteil (2) und eine zweite umlaufende Schneidkante (13) an dem lösbaren Flanschteil (9) aufweist und dass die Schneidkanten (8, 13) einander zugewandt sind.

4. Vakuumbehälterwandelement nach Anspruch 1 oder 2, **dadurch gekennzeichnet, dass** der ringförmige Dichtbereich eine erste Dichtfläche an dem festen Flanschteil (2) und eine zweite Dichtfläche an dem lösbaren Flanschteil (9) aufweist und dass die Dichtflächen einander zugewandt sind und parallel zueinander verlaufen.

5. Vakuumbehälterwandelement nach einem der Ansprüche 1 bis 4, **dadurch gekennzeichnet, dass** das feste Flanschteil (2) innerhalb des ringförmigen Dichtbereichs eine Aussparung (5) aufweist.

6. Vakuumbehälterwandelement nach einem der Ansprüche 1 bis 5, **dadurch gekennzeichnet, dass** das feste Flanschteil (2) eine äußere Flanschverbindung aufweist.

7. Vakuumbehälterwandelement nach einem der Ansprüche 1 bis 6, **dadurch gekennzeichnet, dass** die Leitung (15, 15') als Fluidleitung ausgebildet ist.

8. Vakuumbehälterwandelement nach Anspruch 7, **dadurch gekennzeichnet, dass** die Fluidleitung (15, 15') gegen das lösbare Flanschteil (9) elektrisch isoliert ist.

9. Vakuumbehälterwandelement nach Anspruch 7 oder 8, **dadurch gekennzeichnet, dass** eine zweite Fluidleitung (15, 15') in dem lösbaren Flanschteil (9) gehalten ist und dass die erste Fluidleitung und die zweite Fluidleitung auf der zum Inneren (V) des Vakuumbehälters weisenden Seite des Wandelements zu einer geschlossenen Ringleitung verbunden sind.

10. Vakuumbehälterwandelement nach einem der Ansprüche 1 bis 9, **dadurch gekennzeichnet, dass** die Leitung als elektrische Leitung ausgeführt ist.

## Claims

1. Vacuum vessel wall member comprising a fixed flange part (2), comprising a separable flange part (9) and comprising a line (15, 15') which extends from the inside (V) of the vacuum vessel to the outside, the separable flange part (9) being separably connected to the fixed flange part (2), the line (15, 15') being held in the separable flange part (9) and an annular sealing region being provided between the fixed flange part (2) and the separable flange part (9), **characterised in that** the separable flange part (9) is arranged on the side of the wall member facing the inside (V) of the vacuum vessel and **in that** a screw connection is provided inside the annular sealing region.

2. Vacuum vessel wall member according to claim 1, **characterised in that** the screw fitting includes a plurality of bores (6) through the fixed flange part (2) and a plurality of tapped blind holes (10) in the separable flange part (9) which are aligned with said bores, and **in that** the tapped blind holes (10) extend from the surface of the separable flange part (9) facing the fixed flange part (2).

3. Vacuum vessel wall member according to either claim 1 or claim 2, **characterised in that** the annular sealing region has a first rotating cutting edge (8) on the fixed flange part (2) and a second rotating cutting edge (13) on the separable flange part (9) and **in that** the cutting edges (8, 13) face one another.

4. Vacuum vessel wall member according to either claim 1 or claim 2, **characterised in that** the annular sealing region has a first sealing surface on the fixed flange part (2) and a second sealing surface on the separable flange part (9) and **in that** the sealing surfaces face one another and extend parallel to one another.

5. Vacuum vessel wall member according to any one of claims 1 to 4, **characterised in that** the fixed flange part (2) has a recess (5) inside the annular sealing region.

6. Vacuum vessel wall member according to any one of claims 1 to 5, **characterised in that** the fixed flange part (2) has an outer flange joint.

7. Vacuum vessel wall member according to any one of claims 1 to 6, **characterised in that** the line (15, 15') is formed as a fluid line.

8. Vacuum vessel wall member according to claim 7, **characterised in that** the fluid line (15, 15') is electrically insulated from the separable flange part (9),

9. Vacuum vessel wall member according to either claim 7 or claim 8, **characterised in that** a second fluid line (15, 15') is held in the separable flange part (9) and **in that** the first fluid line and the second fluid line are joined on the side of the wall member facing the inside (V) of the vacuum vessel to form a closed-circuit ring main.

10. Vacuum vessel wall member according to any one of claims 1 to 9, **characterised in that** the line is in the form of an electrical line.

## Revendications

1. Élément de paroi de récipient sous vide comprenant une partie de bride fixe (2), une partie de bride amovible (9) et une conduite (15, 15') qui passe de l'intérieur (V) du récipient sous vide à l'extérieur, la partie de bride amovible (9) étant reliée de manière détachable à la partie de bride fixe (2), la conduite (15, 15') étant maintenue dans la partie de bride amovible (9), et entre la partie de bride fixe (2) et la partie de bride amovible (9) étant prévue une zone d'étanchéité annulaire, **caractérisé en ce que** la partie de bride amovible (9) est disposée sur le côté de l'élément de paroi tourné vers l'intérieur (V) du récipient sous vide, et **en ce qu'**une liaison vissée est prévue à l'intérieur de la zone d'étanchéité annulaire.

2. Élément de paroi de récipient sous vide selon la revendication 1, **caractérisé en ce que** le moyen de vissage comprend une pluralité de trous (6) à travers la partie de bride fixe (2) et, dans l'alignement de ceux-ci, une pluralité de trous borgnes filetés (10) dans la partie de bride amovible (9), et **en ce que** les trous borgnes filetés (10) s'étendent à partir de la surface de la partie de bride amovible (9) tournée vers la partie de bride fixe (2).

3. Élément de paroi de récipient sous vide selon la revendication 1 ou 2, **caractérisé en ce que** la zone d'étanchéité annulaire comprend une première arête tranchante périphérique (8) sur la partie de bride fixe (2) et une seconde arête tranchante périphérique (13) sur la partie de bride amovible (9), et **en ce que** les arêtes tranchantes (8, 13) sont tournées l'une vers l'autre.

4. Élément de paroi de récipient sous vide selon la revendication 1 ou 2, **caractérisé en ce que** la zone d'étanchéité annulaire comporte une première surface d'étanchéité sur la partie de bride fixe (2) et une seconde surface d'étanchéité sur la partie de bride amovible (9), et **en ce que** les surfaces d'étanchéité sont tournées l'une vers l'autre et s'étendent parallèlement l'une à l'autre.

5. Élément de paroi de récipient sous vide selon une des revendications 1 à 4, **caractérisé en ce que** la partie de bride fixe (2) est pourvue d'un évidement (5) à l'intérieur de la zone d'étanchéité annulaire.

6. Élément de paroi de récipient sous vide selon une des revendications 1 à 5, **caractérisé en ce que** la partie de bride fixe (2) comporte une liaison de bridage extérieure.

7. Élément de paroi de récipient sous vide selon une des revendications 1 à 6, **caractérisé en ce que** la conduite (15, 15') est conformée en conduite de fluide.

8. Élément de paroi de récipient sous vide selon la revendication 7, **caractérisé en ce que** la conduite de fluide (15, 15') est isolée électriquement par rapport à la partie de bride amovible (9).

9. Élément de paroi de récipient sous vide selon la revendication 7 ou 8, **caractérisé en ce qu'**une seconde conduite de fluide (15, 15') est maintenue dans la partie de bride amovible (9), et **en ce que**, sur le côté de l'élément de paroi tourné vers l'intérieur (V) du récipient sous vide, la première conduite de fluide et la seconde conduite de fluide sont reliées pour former une conduite en circuit fermé.

10. Élément de paroi de récipient sous vide selon une des revendications 1 à 9, **caractérisé en ce que** la conduite est conformée en conduite électrique.
